# EUROPÄISCHE PATENTANMELDUNG

(11) **EP 4 850 529 A1**
(43) Veröffentlichungstag der Anmeldung: **09.12.2026**
(21) Anmeldenummer: 26174688.7
(22) Anmeldetag: 27.04.2026
(51) Int. Cl.: A01M 7/00

(54) **LANDWIRTSCHAFTLICHE VERTEILMASCHINE MIT EINER SCHWENK- UND/ODER HÖHENLAGENSTEUERUNG FÜR EIN VERTEILGESTÄNGE ANHAND EINES ERMITTELTEN GELÄNDEMODELLS**

(30) Priorität: 03.06.2025 DE 102025121510
(71) Anmelder: HORSCH LEEB Application Systems SE & Co. KG, 94405 Landau a.d. Isar (DE)
(72) Erfinder: LIMMER, Martin, 94405 Landau an der Isar (DE); ZELLMER, Fabian, 94405 Landau an der Isar (DE)
(74) Vertreter: v. Bezold & Partner Patentanwälte - PartG mbB

(57) **Zusammenfassung**

Die Erfindung betrifft eine Verteilmaschine (1), vorzugsweise Feldspritze oder pneumatischer Düngerstreuer, mit einem Verteilgestänge (2), das zwei seitliche Ausleger (3) und ein Mittelteil (4) umfasst, wobei jeder Ausleger (3) mittels einer Ausleger-Schwenkachse (A) mit dem Mittelteil (4) schwenkbar verbunden ist und wobei jeder Ausleger (3) zumindest zwei Segmente (3a) umfasst, die jeweils mittels einer Segment-Schwenkachse (B) schwenkbar miteinander verbunden sind, einem ansteuerbaren Stelleinrichtungssystem (30) zur Veränderung einer Schwenk- und/oder Höhenlage des Mittelteils (4) und/oder der Segmente (3a) relativ zu einer zu bearbeitenden landwirtschaftlichen Zielfläche (Z), Sensorik (10), die dazu ausgebildet ist, die Zielfläche (Z) zu erfassen und basierend auf der erfassten Zielfläche (Z) erste Messdaten zu generieren, und einer Steuereinrichtung (20), die dazu ausgebildet ist, basierend auf den ersten Messdaten ein Geländemodell zu erzeugen, und/oder Stellsignale (31) für das Stelleinrichtungssystem (30) abhängig von den ersten Messdaten und/oder von dem Geländemodell zu erzeugen. Die Erfindung betrifft auch ein entsprechendes Verfahren.

## Beschreibung

Die Erfindung betrifft eine insbesondere landwirtschaftliche Verteilmaschine, vorzugsweise eine Feldspritze oder ein pneumatischer Düngerstreuer, insbesondere mit einer Schwenk- und/oder Höhenlagensteuerung für ein Verteilgestänge anhand eines ermittelten Geländemodells, insbesondere Geländereliefs. Die Erfindung betrifft ebenfalls ein entsprechendes Verfahren.

Die EP 2 186 405 A1 offenbart ein Spritzgestänge mit mindestens zwei über Gelenke an einem Mittelteil angeordneten Auslegern und an den Auslegern angeordneten Spritzdüsen zum Ausbringen von Flüssigkeiten, wobei jeder Ausleger in mindestens zwei Segmente unterteilt ist, die über eine horizontale Achse schwenkbar angeordnet sind, wobei die Segmente untereinander mittels Gelenken verbunden sind und eine Stellbewegung der einzelnen Segmente zueinander aktiv steuerbar ist, wobei jedem der Gelenke zwischen den Segmenten jeweils eine steuerbare Stellvorrichtung zugeordnet ist, und wobei den Segmenten Sensoren zur Erfassung und Weiterleitung eines Istwertes bezüglich der Relativposition der Segmente zugeordnet sind, wobei die Sensoren jeweils an Seiten der Ausleger angeordnet sind, um eine Bodenkontur punktuell an Erfassungspunkten zu erfassen. Die Regelung der Schwenk- und Höhenlage der Ausleger basiert somit auf einer nur punktuellen Erfassung der Bodenkontur. Daraus folgt, dass zwischen den punktuellen Erfassungspunkten das Verteilgestänge relativ ungenau an die Bodenkontur angepasst sein kann, z. B. stellenweise zu hoch oder zu niedrig.

Eine Aufgabe der Erfindung ist es, eine landwirtschaftliche Verteilmaschine zu schaffen, mit einer genaueren, verbesserten und/oder alternativen Möglichkeit zur Schwenk- und/oder Höhenlagen-Steuerung eines Verteilgestänges, vorzugsweise eine Möglichkeit zu schaffen, mittels der eine möglichst genaue Anpassung (z. B. Annäherung) des Verteilgestänges an unterschiedliche Konturen einer Zielfläche ermöglicht wird, insbesondere unter Einhaltung eines Mindest-Sollhöhenabstands zur Zielfläche und/oder ohne dass das Verteilgestänge mit der Zielfläche in Kontakt kommt.

Die Aufgabe kann durch die Merkmale der unabhängigen Ansprüche gelöst werden. Vorteilhafte Weiterbildungen der Erfindung sind in den Unteransprüchen offenbart oder ergeben sich aus der folgenden Beschreibung bevorzugter Ausführungsbeispiele der Erfindung.

Die Erfindung betrifft eine insbesondere landwirtschaftliche Verteilmaschine, vorzugsweise eine Feldspritze oder einen pneumatischen Düngerstreuer, beispielsweise mit einer Schwenk- und/oder Höhenlagensteuerung (z. B. Schwenk- und/oder Höhenlagenregelung und/oder zweckmäßig mit und/oder ohne Rückkopplung) für ein Verteilgestänge basierend auf einem ermittelten Geländemodell einer zu bearbeitenden landwirtschaftlichen Zielfläche.

Die Verteilmaschine umfasst insbesondere ein Verteilgestänge, insbesondere zum Ausbringen von (z. B. flüssigem und/oder granulatartigem) Verteilmaterial (vorzugsweise Düngemittel, Pflanzenschutzmittel und/oder Saatgut).

Das Verteilgestänge umfasst zwei seitliche Ausleger und ein Mittelteil umfasst, wobei vorzugsweise die Ausleger und/oder das Mittelteil jeweils eine Mehrzahl von Ausbringelementen zum Ausbringen des Verteilmaterials aufweisen.

Das Verteilmaterial kann z. B. flüssig sein (z. B. Pflanzenschutzmittel und/oder Düngemittel) und/oder granulatartig sein (z. B. fest, Düngemittel und/oder Saatgut).

Es ist möglich, dass jeder Ausleger mittels einer Ausleger-Schwenkachse mit dem Mittelteil schwenkbar verbunden ist und/oder jeder Ausleger zumindest zwei oder zumindest drei Segmente (insbesondere Ausleger-Segmente) umfasst und somit vorzugsweise in zumindest zwei oder zumindest drei Segmente unterteilt ist, die jeweils mittels einer Segment-Schwenkachse schwenkbar miteinander verbunden sind. Alternativ oder ergänzend ist es möglich, dass beispielsweise das Mittelteil um eine Mittelteil-Schwenkachse schwenkbar ist.

Das Verteilgestänge kann beispielsweise zwei Ausleger-Schwenkachsen umfassen und alternativ oder ergänzend vorzugsweise zumindest zwei, zumindest vier oder zumindest sechs Segment-Schwenkachsen.

Die Ausleger-Schwenkachsen können vorzugsweise durch jeweils ein Gelenk (z. B. Dreh- und/oder Schwenkgelenk) erzeugt und/oder definiert werden, wobei beispielsweise das eine der Gelenke zweckmäßig zwischen dem einen Ausleger und dem Mitteilteil und das andere der Gelenke zwischen dem anderen Ausleger und dem Mitteilteil angeordnet sein kann.

Alternativ oder ergänzend können die Segment-Schwenkachsen vorzugsweise durch jeweils ein Gelenk (z. B. Dreh- und/oder Schwenkgelenk) erzeugt und/oder definiert werden, wobei die jeweiligen Gelenken insbesondere zwischen den Segmenten angeordnet sein können.

Alternativ oder ergänzend kann die Mittelteil-Schwenkachse vorzugsweise durch ein Gelenk (z. B. Dreh- und/oder Schwenkgelenk) erzeugt und/oder definiert werden.

Die Ausleger-Schwenkachsen und/oder die Segment-Schwenkachsen erstrecken sich vorzugsweise (zweckmäßig im Wesentlichen) parallel zueinander und/oder (zweckmäßig im Wesentlichen) parallel zur Fahrtrichtung der Verteilmaschine (insbesondere Arbeits- und/oder VorwärtsFahrtrichtung der Verteilmaschine). Alternativ oder ergänzend kann sich die Mittelteil-Schwenkachse z. B. (zweckmäßig im Wesentlichen) parallel zu den Ausleger-Schwenkachsen, den Segment-Schwenkachsen und/oder der Fahrtrichtung der Verteilmaschine erstrecken.

Die Verteilmaschine umfasst ein insbesondere ansteuerbares Stelleinrichtungssystem (z. B. einen oder mehrere Aktoren, Stelleinrichtungen und/oder Stellzylinder) zur Veränderung einer Schwenk-und/oder Höhenlage des Mittelteils und/oder der Segmente relativ zu einer zu bearbeitenden landwirtschaftlichen Zielfläche (z. B. eine Bodenoberfläche und/oder Bestandsoberfläche, insbesondere Pflanzenbestandsoberfläche), wodurch z. B. eine Pose des Verteilgestänges veränderbar und vorzugsweise an eine Kontur der Zielfläche anpassbar (z. B. annäherbar) ist, vorzugsweise an eine Kontur, die z. B. in Längserstreckungsrichtung der Ausleger, quer zur Fahrtrichtung der Verteilmaschine und/oder in Fahrtrichtung der Verteilmaschine vorausliegend) unterschiedliche Höhen und/oder ein sich veränderndes Höhenprofil aufweist.

Das Stelleinrichtungssystem kann z. B. zum (insbesondere im Wesentlichen vertikalen) Anheben und Absenken des Mittelteils, zum Verschwenken des Mittelteils um eine Mittelteil-Schwenkachse, zum Verschwenken der Ausleger um Ausleger-Schwenkachsen und/oder zum Verschwenken der Segmente um Segment-Schwenkachsen dienen. Hierfür kann das Stelleinrichtungssystem beispielsweise mehrere (z. B. pneumatische, hydraulische und/oder elektrische) Aktoren, Stelleinrichtungen und/oder Stellzylinder umfassen.

Die Verteilmaschine umfasst Sensorik zur Erfassung der Zielfläche.

Die Sensorik kann vorzugsweise mehrere Sensoren umfassen kann, beispielweise zumindest einen ersten Sensor (z. B. ein Fernbereich-Sensor) insbesondere zur Erfassung (z. B. Fernbereich-Erfassung) der Zielfläche und/oder zumindest einen zweiten Sensor (z. B. ein Nahbereich-Sensor) insbesondere zur Erfassung (z. B. Nahbereich-Erfassung) der Zielfläche. Die Sensorik kann beispielsweise zumindest einen ersten Sensor umfassen, zur Nahbereich- und Fernbereich-Erfassung.

Die Zielfläche kann beispielsweise ein Verteilgestänge-Vorfeld der Zielfläche umfassen.

Die Sensorik ist insbesondere dazu ausgebildet, die insbesondere vorausliegende Zielfläche, vorzugsweise ein Verteilgestänge-Vorfeld der Zielfläche, zweckmäßig sensorisch zu erfassen (z. B. abzutasten, zu messen, zu scannen und/oder zu detektieren) und basierend auf der erfassten Zielfläche erste Messdaten zu generieren (z. B. zu sammeln, aufzuzeichnen und/oder zu registrieren), beispielsweise um vorausliegende (z. B. sich verändernde) Werte zum Höhenabstand des Verteilgestänges zur Zielfläche und/oder eine vorausliegende (z. B. sich verändernde) Kontur der Zielfläche (z. B. mittelbar oder unmittelbar und/oder vorauseilend) zu ermitteln (z. B. zu messen, zu erfassen, zu bestimmen, zu berechnen und/oder zu beschreiben). Beispielsweise kann die Kontur, z. B. in Längserstreckungsrichtung der Ausleger, quer zur Fahrtrichtung der Verteilmaschine und/oder in Fahrtrichtung der Verteilmaschine vorausliegend, unterschiedliche Höhen und/oder ein sich veränderndes Höhenprofil aufweisen.

Die Sensorik kann beispielsweise dazu ausgebildet sein, erste Messdaten (z. B. Messwerte) zu generieren (z. B. zu sammeln, aufzuzeichnen und/oder zu registrieren), vorzugsweise um vorausliegende Werte zu Höhenabstandsänderungen des Verteilgestänges zur Zielfläche und/oder vorausliegende Konturänderungen der Zielfläche (z. B. mittelbar oder unmittelbar und/oder vorauseilend) zu ermitteln (z. B. zu messen, zu erfassen, zu bestimmen, zu berechnen und/oder zu beschreiben). Beispielsweise können die Konturänderungen insbesondere Konturänderungen z. B. in Längserstreckungsrichtung der Ausleger, quer zur Fahrtrichtung der Verteilmaschine und/oder in Fahrtrichtung der Verteilmaschine vorausliegend umfassen.

Die Sensorik ist vorzugsweise dazu ausgebildet, die insbesondere vorausliegende Zielfläche und/oder ein Verteilgestänge-Vorfeld der Zielfläche z. B. vorauseilend (zweckmäßig vorausschauend) zu erfassen.

Die Verteilmaschine umfasst eine Steuereinrichtung, die dazu ausgebildet ist, basierend auf den ersten Messdaten (z. B. in Echtzeit und/oder während des Feldbetriebs) ein Geländemodell, z. B. ein Geländerelief, (insbesondere der vorausliegenden Zielfläche) zu erzeugen, und/oder Stellsignale für das Stelleinrichtungssystem abhängig von den ersten Messdaten und/oder von dem Geländemodell zu erzeugen (beispielsweise um eine Schwenk- und/oder Höhenlage für das Verteilgestänge, insbesondere für das Mittelteil und/oder die Segmente, an eine Kontur der Zielfläche anzupassen, vorzugsweise eine Kontur, die (z. B. in Längserstreckungsrichtung der Ausleger, quer zur Fahrtrichtung der Verteilmaschine und/oder in Fahrtrichtung der Verteilmaschine vorausliegend) unterschiedliche Höhen, Konturänderungen und/oder ein sich veränderndes Höhenprofil aufweist).

Die Steuereinrichtung kann z. B. Steuer- und/oder Regelungsaufgaben übernehmen und/oder eine Steuer- und/oder Regelungseinrichtung sein, zweckmäßig mit und/oder ohne Rückkopplung.

Das Geländemodell ist und/oder umfasst vorzugsweise ein Geländerelief.

Die Sensorik kann beispielweise dazu ausgebildet sein, die insbesondere vorausliegende Zielfläche, vorzugsweise das Verteilgestänge-Vorfeld der Zielfläche, über die (insbesondere im Wesentlichen) gesamte Arbeitsbreite der zwei Ausleger oder über die (insbesondere im Wesentlichen) gesamte Arbeitsbreite des Verteilgestänges (vorzugsweise sensorisch) zu erfassen und vorzugsweise basierend hierauf die ersten Messdaten und/oder das Geländemodell zu generieren. Dadurch kann vorzugsweise gewährleistet werden, dass die insbesondere vorausliegende Zielfläche, vorzugsweise das Verteilgestänge-Vorfeld der Zielfläche, über die (insbesondere im Wesentlichen) gesamte Arbeitsbreite der zwei Ausleger oder über die (insbesondere im Wesentlichen) gesamte Arbeitsbreite des Verteilgestänges insbesondere lückenlos und/oder durchgehend erfasst werden kann und damit beispielsweise nicht nur punktuell oder nur stellenweise.

Es ist möglich, dass das Geländemodell die insbesondere vorausliegende Zielfläche über die im Wesentlichen gesamte Arbeitsbreite der zwei Ausleger oder über die im Wesentlichen gesamte Arbeitsbreite des Verteilgestänges (z. B. lückenlos und/oder durchgehend) umfassen (z. B. abbilden) kann und/oder die Stellsignale unter Berücksichtigung der (insbesondere vorausliegenden) Zielfläche über die (insbesondere im Wesentlichen) gesamte Arbeitsbreite der zwei Ausleger oder die (insbesondere im Wesentlichen) gesamte Arbeitsbreite des Verteilgestänges erzeugt werden können. Somit ist es insbesondere möglich, dass das Geländemodell das Verteilgestänge-Vorfeld der Zielfläche über die im Wesentlichen gesamte Arbeitsbreite der zwei Ausleger oder über die im Wesentlichen gesamte Arbeitsbreite des Verteilgestänges (z. B. lückenlos und/oder durchgehend) umfassen kann und/oder die Steuereinrichtung zur Erzeugung der Stellsignale das Verteilgestänge-Vorfeld der Zielfläche über die im Wesentlichen gesamte Arbeitsbreite der zwei Ausleger oder über die im Wesentlichen gesamte Arbeitsbreite des Verteilgestänges berücksichtigen kann.

Es ist möglich, dass die Steuereinrichtung dazu ausgebildet ist, die Stellsignale zu erzeugen, bevor das Verteilgestänge eine vorausliegende Höhenänderung und/oder Konturänderung der Zielfläche erreicht und/oder um eine Reaktionszeit bei der Schwenk- und/oder Höhenlagensteuerung des Verteilgestänges zumindest teilweise zu kompensieren. Alternativ oder ergänzend kann die Steuereinrichtung z. B. dazu ausgebildet sein, die Stellsignale für das Stelleinrichtungssystem abhängig von den ersten Messdaten und/oder von dem Geländemodell zu erzeugen, um eine Schwenk-und/oder Höhenlage des Mittelteils und/oder der Segmente und somit insbesondere eine Pose des Verteilgestänges zweckmäßig möglichst genau eine Kontur der Zielfläche anzupassen.

Die Zielfläche und/oder die Kontur der Zielfläche kann, z. B. in Längserstreckungsrichtung der Ausleger, quer zur Fahrtrichtung der Verteilmaschine und/oder in Fahrtrichtung der Verteilmaschine vorausliegend, unterschiedliche Höhen, Konturänderungen und/oder ein sich veränderndes Höhenprofil aufweisen.

Das Mittelteil kann beispielsweise schwenkbar sein, insbesondere um die bereits erwähnte Mittelteil-Schwenkachse.

Die Steuereinrichtung kann z. B. dazu ausgebildet sein, die Stellsignale vorzugsweise zu erzeugen, um eine Schwenklagen-Veränderung der Ausleger um die Ausleger-Schwenkachsen zu bewirken, und/oder um eine Schwenklagen-Veränderung der Segmente um die Segment-Schwenkachsen zu bewirken. Alternativ oder ergänzend kann die Steuereinrichtung z. B. dazu ausgebildet sein, die Stellsignale beispielsweise zu erzeugen, um ein, insbesondere im Wesentlichen vertikales, Anheben und Absenken des Mittelteils und somit insbesondere der Ausleger zu bewirken, und/oder um eine Schwenklagen-Veränderung des Mittelteils um die Mittelteil-Schwenkachse zu bewirken. Die Stellsignale zur Schwenk- und/oder Höhenlagen-Veränderung der Ausleger, der Segmente und/oder des Mittelteils können beispielsweise zeitgleich und/oder zeitversetzt erzeugt werden und/oder zeitgleich und/oder zeitversetzt an das Stelleinrichtungssystem übermittelt werden.

Die Steuereinrichtung kann beispielsweise dazu ausgebildet sein, (z. B. abhängig von dem Geländemodell und/oder mittels eines Näherungs- und/oder Iterations-Verfahrens und/oder eines Näherungs- und/oder Optimierungsalgorithmus) eine an eine Kontur (z. B. Ist-Kontur und/oder vorausliegende Kontur) der Zielfläche (z. B. iterativ und/oder näherungsweise) angepasste (z. B. angenäherte) Schwenk- und/oder Höhenlage (z. B. Pose) für das Verteilgestänge zu berechnen und/oder die Stellsignale basierend auf einer an eine Kontur der Zielfläche angepassten Schwenk-und/oder Höhenlage (z. B. Pose) für das Verteilgestänge zu erzeugen.

Es ist insbesondere möglich, dass die zweckmäßig berechnete, an die Kontur der Zielfläche angepasste Schwenk- und/oder Höhenlage für das Verteilgestänge iterativ und/oder näherungsweise (z. B. optimal und/oder maximal, insbesondere unter Berücksichtigung der Freiheitsgrade des Verteilgestänges) an die Kontur der Zielfläche angenähert (z. B. angepasst) wird. Alternativ oder ergänzend ist es z. B. möglich, dass bei der an die Kontur der Zielfläche angepassten Schwenk-und/oder Höhenlage für das Verteilgestänge eine mittlere (z. B. durchschnittliche) Abstandshöhe des Verteilgestänges zur Kontur der Zielfläche (z. B. iterativ und/oder näherungsweise maximal) minimiert und/oder reduziert wird. Alternativ oder ergänzend ist es z. B. möglich, dass bei der an die Kontur der Zielfläche angepassten Schwenk- und/oder Höhenlage für das Verteilgestänge eine (z. B. zwei- oder dreidimensionale) Abstandsfläche zwischen dem Verteilgestänge und der Kontur der Zielfläche (z. B. iterativ und/oder näherungsweise maximal) minimiert und/oder reduziert wird. Dadurch kann vorzugsweise die Schwenk- und/oder Höhenlage des Verteilgestänges und damit insbesondere die Pose des Verteilgestänges (z. B. iterativ und/oder näherungsweise) optimal und/oder maximal an eine Kontur (z. B. Ist-Kontur und/oder vorausliegende Kontur) der Zielfläche angepasst werden.

Die Steuereinrichtung kann z. B. dazu ausgebildet sein, insbesondere abhängig von dem Geländemodell (und vorzugsweise abhängig von den weiter unten offenbarten Freiheitsgraden des Verteilgestänges) eine Vielzahl von an eine Kontur der Zielfläche (z. B. iterativ und/oder näherungsweise) angepassten Schwenk- und/oder Höhenlagen für das Verteilgestänge (z. B. iterativ und/oder näherungsweise) zu berechnen und vorzugsweise die Schwenk- und/oder Höhenlage auszuwählen und vorzugsweise zur Erzeugung der Stellsignale zu verwenden, die z. B. iterativ und/oder näherungsweise maximal an die Kontur der Zielfläche angenähert ist, bei der eine mittlere (z. B. durchschnittliche) Abstandshöhe des Verteilgestänges zur Kontur der Zielfläche z. B. iterativ und/oder näherungsweise maximal minimiert ist, und/oder bei der eine (z. B. zwei- oder dreidimensionale) Abstandsfläche zwischen dem Verteilgestänge und der Kontur der Zielfläche z. B. iterativ und/oder näherungsweise maximal minimiert ist.

Die Steuereinrichtung ist somit vorzugsweise dazu ausgebildet, um eine an eine Kontur der Zielfläche vorzugsweise iterativ und/oder näherungsweise (z. B. optimal und/oder maximal) angepasste Schwenk- und/oder Höhenlage (z. B. Pose) für das Verteilgestänge zu berechnen und/oder hierauf basierend die Stellsignale zu erzeugen und zwar vorzugsweise unter Berücksichtigung der Schwenkfreiheitsgrade der Ausleger um die Ausleger-Schwenkachsen, der Schwenkfreiheitsgrade der Segmente um die Segment-Schwenkachsen, dem Schwenkfreiheitsgrad des Mittelteils um die Mittelteil-Schwenkachse, dem Höhenfreiheitsgrad des Mittelteils, der Geometrie des Verteilgestänges (z. B. Position der Schwenkfreiheitsgrade, Länge der Segmente und/oder des Mittelteils) etc.) und/oder einem Mindest-Sollabstand (insbesondere Mindest-Sollhöhenabstand) des Verteilgestänges zur Kontur der Zielfläche, wobei beispielsweise der Mindest-Sollabstand durch eine Sollkurve definiert werden kann, die durch die Steuereinrichtung ermittelbar ist und/oder die parallel beabstandet zur Kontur der Zielfläche verläuft.

Damit können vorzugsweise alle oder zumindest alle relevanten Freiheitsgrade bei der Berechnung der an die Kontur der Zielfläche insbesondere optimal angepassten Schwenk- und/oder Höhenlage für das Verteilgestänge berücksichtigt werden.

Die insbesondere mittels der Steuereinrichtung durchgeführte Berechnung der an die Kontur der Zielfläche angepassten Schwenk- und/oder Höhenlage (z. B. Pose) für das Verteilgestänge und/oder die Erzeugung der Stellsignale kann beispielsweise mittels eines Näherungs- und/oder Iterations-Verfahrens und/oder einem Näherungs- und/oder Optimierungsalgorithmus erfolgen (z. B. mittels einem Newton-, Gradienten- und/oder Evolutions-Verfahren und/oder -Algorithmus).

Es ist möglich, dass die Steuereinrichtung dazu ausgebildet ist, die insbesondere an die Kontur der Zielfläche angepasste (z. B. angenäherte) Schwenk- und/oder Höhenlage für das Verteilgestänge z. B. abhängig von dem Geländemodell und zumindest einem von folgenden zu berechnen und/oder die Stellsignale z. B. abhängig von dem Geländemodell und zumindest einem von folgenden zu erzeugen:
- den Schwenkfreiheitsgraden der Ausleger um die Ausleger-Schwenkachsen,
- den Schwenkfreiheitsgraden der Segmente um die Segment-Schwenkachsen,
- dem Schwenkfreiheitsgrad des Mittelteils um die Mittelteil-Schwenkachse,
- den Höhenfreiheitsgraden des Mittelteils,
- der Ist-Schwenk- und/oder Höhenlage des Verteilgestänges,
- der Geometrie des Verteilgestänges (z. B. Position der Schwenkfreiheitsgrade und/oder der Schwenkachsen, Länge der Segmente und/oder des Mittelteils etc.), und/oder
- einem Mindest-Sollabstand (z. B. Mindest-Sollhöhenabstand) des Verteilgestänges zur Kontur der Zielfläche, wobei vorzugsweise der Mindest-Sollabstand (z. B. Mindest-Sollhöhenabstand) durch eine Sollkurve definiert werden kann, die durch die Steuereinrichtung ermittelbar ist und/oder die im Wesentlichen parallel beabstandet zur Kontur der Zielfläche verläuft.

Die Sensorik kann dazu ausgebildet sein, vorzugsweise mittels einer Fernbereich-Erfassung die ersten Messdaten (z. B. Messwerte) zu generieren (z. B. zu sammeln, aufzuzeichnen und/oder zu registrieren), vorzugsweise um vorausliegende Werte zum Höhenabstand des Verteilgestänges zur Zielfläche und/oder eine vorausliegende Kontur der Zielfläche (z. B. mittelbar oder unmittelbar und/oder vorauseilend) zu ermitteln (z. B. zu messen, zu erfassen, zu bestimmen, zu berechnen und/oder zu beschreiben).

Es ist möglich, dass die Sensorik dazu ausgebildet ist, vorzugsweise mittels einer Nahbereich-Erfassung zweite Messdaten (z. B. Messwerte) zu generieren (z. B. zu sammeln, aufzuzeichnen und/oder zu registrieren), um eine Nahbereich-Kontur der Zielfläche (z. B. mittelbar oder unmittelbar) zu ermitteln (z. B. zu messen, zu erfassen, zu bestimmen, zu berechnen und/oder zu beschreiben).

Die Nahbereich-Erfassung dient insbesondere zur Nahbereich-Erfassung der Zielfläche, z. B. eines Nahbereichs und/oder Ist-Bereichs senkrecht unterhalb des Verteilgestänges und/oder in Fahrtrichtung der Verteilmaschine vorzugsweise direkt vor dem Verteilgestänge.

Die Fernbereich-Erfassung dient insbesondere zur Erfassung eines Fernbereichs der Zielfläche, zweckmäßig in Fahrtrichtung der Verteilmaschine (z. B. relativ weit entfernt) vor dem Verteilgestänge. Alternativ oder ergänzend kann die Fernbereich-Erfassung z. B. ein Abtasten, Messen, Detektieren und/oder Scannen umfassen.

Die Nahbereich-Erfassung dient insbesondere zur Erfassung eines Nahbereichs der Zielfläche, zweckmäßig in Fahrtrichtung der Verteilmaschine (z. B. relativ nah) vor dem Verteilgestänge und/oder z. B. senkrecht unterhalb des Verteilgestänges. Alternativ oder ergänzend kann die Nahbereich-Erfassung z. B. ein Abtasten, Messen, Detektieren und/oder Scannen umfassen.

Bevorzugt ist, dass der Fernbereich und/oder die Fernbereich-Erfassung - insbesondere in Fahrtrichtung der Verteilmaschine gesehen - zumindest teilweise dem Nahbereich und/oder der Nahbereich-Erfassung (insbesondere räumlich und/oder positionsbezogen) vorauseilt. Es ist somit möglich, dass der Fernbereich und/oder die Fernbereich-Erfassung- beispielsweise in Fahrtrichtung der Verteilmaschine gesehen - zweckmäßig zumindest teilweise vor dem Nahbereich und/oder der Nahbereich-Erfassung (insbesondere räumlich und/oder positionsbezogen) liegt. Alternativ oder ergänzend kann beispielsweise die Fernbereich-Erfassung eine relativ zur Nahbereich-Erfassung weiter nach vorne auf die Zielfläche orientierte Blick- und/oder Erfassungsrichtung aufweisen.

Es ist möglich, dass die Steuereinrichtung dazu ausgebildet ist, basierend auf dem Geländemodell, den ersten Messdaten und/oder der Fernbereich-Erfassung das Stelleinrichtungssystem (z. B. mittels der Stellsignale) vorauseilend voranzusteuern, vorzugsweise um es auf bevorstehende Veränderungen der Schwenk- und/oder Höhenlage des Verteilgestänges vorzubereiten, und/oder basierend auf den zweiten Messdaten und/oder der Nahbereich-Erfassung das Stelleinrichtungssystem anzusteuern, um die Schwenk- und/oder Höhenlage für das Verteilgestänges (z. B. mittels der Stellsignale) an die Nahbereich-Kontur der Zielfläche anzupassen.

Die ersten und/oder zweiten Messdaten können beispielsweise dreidimensionale Koordinaten der Zielfläche liefern.

Es ist möglich, dass das Geländemodell dreidimensional ist, in Sektoren unterteilt ist und/oder auf den ersten und/oder zweiten Messdaten und/oder auf den dreidimensionalen Koordinaten der Zielfläche basiert.

Die Steuereinrichtung kann beispielsweise dazu ausgebildet sein, (insbesondere zur Erzeugung des Geländemodells) die ersten und/oder zweiten Messdaten (insbesondere die dreidimensionalen Koordinaten) in ein Koordinatensystem mit einem Geländemodell-Raster und/oder Geländemodell-Sektoren zu übertragen, wobei beispielsweise abhängig von dem Koordinatensystem eine an eine Kontur der Zielfläche angepasste Schwenk- und/oder Höhenlage für das Verteilgestänge berechnet werden kann und/oder die Stellsignale erzeugt werden können.

Es ist möglich, dass die Steuereinrichtung dazu ausgebildet ist, das Geländemodell und/oder die ersten und/oder zweiten Messdaten (insbesondere die dreidimensionalen Koordinaten), vorzugsweise unter Berücksichtigung der Ist-Position der Sensorik und/oder der Ist-Schwenk- und/oder Höhenlage des Verteilgestänges (z. B. des Mittelteils und/oder der Segmente), in und/oder auf ein, vorzugsweise dreidimensionales, Verteilmaschinen- und/oder Verteilgestänge-Koordinatensystem zu übertragen, wobei beispielsweise abhängig von dem Verteilmaschinen- und/oder Verteilgestänge-Koordinatensystem eine an eine Kontur der Zielfläche angepasste Schwenk- und/oder Höhenlage für das Verteilgestänge berechnet werden kann und/oder die Stellsignale erzeugt werden können.

Die Sensorik kann z. B. zumindest einen ersten Sensor (z. B. Fernbereich-Sensor) für die Fernbereich-Erfassung, zumindest einen zweiten Sensor (z. B. Nahbereich-Sensor) für die Nahbereich-Erfassung und/oder zumindest einen ersten Sensor (z. B. Fernbereich-Nahbereich-Sensor) für sowohl die Fernbereich-Erfassung als auch die Nahbereich-Erfassung umfassen.

Die Sensorik kann z. B. Radarsensorik sein oder umfassen.

Die Sensorik kann z. B. einen (z. B. zwei- und/oder dreidimensionalen) Erfassungsbereich (z. B. Sichtbereich) umfassen, beispielsweise zur Fernbereich-Erfassung und/oder Nahbereich-Erfassung.

Der zumindest eine zweite Sensor kann beispielsweise ein Ultraschall-Sensor sein oder ebenfalls ein Radarsensor sein und/oder einen (z. B. zwei- oder dreidimensionalen) Erfassungsbereich (z. B. Sichtbereich) aufweisen.

Es ist möglich, dass die Sensorik (vorzugsweise zur Fernbereich-Erfassung und/oder Nahbereich-Erfassung) einen, insbesondere dreidimensionalen, Erfassungsbereich (z. B. Sichtbereich) aufweist, wobei der Erfassungsbereich z. B. in (zweckmäßig zwei- oder dreidimensionale) Sektoren, vorzugsweise Messsektoren, unterteilt sein kann. Bevorzugt ist beispielsweise, dass die Sektoren des Erfassungsbereichs und die Sektoren des Geländemodells einander entsprechen und/oder die Sektoren des Erfassungsbereichs in Fahrtrichtung der Verteilmaschine unterschiedlich weit von dem Verteilgestänge beabstandet sind.

Vorzugsweise können die Sektoren des Erfassungsbereichs und die Sektoren des Geländemodells einander entsprechen und/oder können die Sektoren des Erfassungsbereichs in Fahrtrichtung der Verteilmaschine unterschiedlich weit von dem Verteilgestänge beabstandet sein.

Es ist möglich, dass die Zielfläche, die Kontur der Zielfläche (z. B. die vorausliegende Kontur, die Fernbereich-Kontur, die Ist-Kontur und/oder die Nahbereich-Kontur) und/oder die Konturänderung (z. B. in Längserstreckungsrichtung der Ausleger und/oder in Fahrtrichtung der Verteilmaschine vorausliegend) unterschiedliche Höhen, Konturänderungen und/oder ein sich veränderndes Höhenprofil aufweist.

Die Steuereinrichtung kann z. B. dazu ausgebildet sein, basierend auf dem Geländemodell und/oder den ersten und/oder zweiten Messdaten (beispielsweise ohne Sollhöhen-Berechnung und/oder ohne Sollhöhen-Bestimmungen) vorausschauend Tendenzen zu ermitteln (z. B. zu messen, zu bestimmen und/oder zu berechnen), wobei die Tendenzen angeben, ob eine (beispielsweise vorausliegende) Schwenk- und/oder Höhenlage für das Mittelteil und/oder die Segmente (insbesondere im Fernbereich) im Vergleich zur Ist-Schwenk- und/oder Höhenlage des Mittelteils und/oder der Segmente (insbesondere im Nahbereich) gleichbleibt oder sich verändert.

Die Tendenzen können beispielsweise als ein Gradient bestimmt werden, wobei vorzugsweise nur eine Richtung des Gradienten (z. B. gleichbleibend, fallend, steigend, Schwenkung in die eine Richtung und/oder Schwenkung in die andere Richtung etc.) und z. B. kein Betrag des Gradienten bestimmt wird.

Die Steuereinrichtung kann z. B. dazu ausgebildet sein, die Stellsignale, vorzugsweise zur Vorsteuerung und/oder Vorbereitung des Stelleinrichtungssystems, abhängig von den Tendenzen (vorzugsweise ohne konkrete Sollhöhen-Bestimmung für das Verteilgestänge) zu erzeugen, vorzugsweise bevor das Verteilgestänge eine vorausliegende Konturänderung der Zielfläche und/oder den Fernbereich erreicht.

Die Ausleger können beispielsweise jeweils, zweckmäßig in Längserstreckungsrichtung der Ausleger gesehen, durch mehrere, z.B. zumindest zwei oder zumindest drei, mittels Gelenken verbundene Segmente zusammengesetzt sein. Zwei benachbarte durch Gelenke verbundene Segmente umfassen vorzugsweise ein inneres Segment und ein äußeres Segment in Bezug auf das Mittelteil.

Das Stelleinrichtungssystem kann z. B. mehrere, vorzugsweise pneumatische, elektrische und/oder hydraulische, Stelleinrichtungen, Stellzylinder und/oder Aktoren etc. aufweisen.

Die Verteilmaschine kann beispielsweise eine selbstfahrende oder eine mittels eines Zugfahrzeugs gezogene oder eine an ein Zugfahrzeug angebaute Verteilmaschine sein. Die selbstfahrende Verteilmaschine kann zudem eine autonom fahrende Landmaschine sein, beispielsweise eine vollautonom oder teilautonom fahrende Landmaschine.

Das Verteilgestänge weist zweckmäßig eine große Arbeitsbreite auf, d. h. eine Arbeitsbreite, die wesentlich größer als eine Breite des Trägerfahrzeugs ist, z. B. ein Vielfaches der Breite des Trägerfahrzeugs.

Die Fahrtrichtung der Verteilmaschine entspricht insbesondere der Arbeits- und/oder Vorwärtsfahrtrichtung der Verteilmaschine.

Die Positionierung (z. B. ein Höhenversatz und/oder ein Versatz in Fahrtrichtung der Verteilmaschine) der Sensorik (z. B. des zumindest einen ersten Sensors und/oder des zumindest einen zweiten Sensors) relativ zum Verteilgestänge (z. B. zur Unterkante des Verteilgestänges) kann beispielsweise in der Steuereinrichtung hinterlegt sein und/oder durch die Steuereinrichtung zur Schwenk- und/oder Höhenlagensteuerung und/oder für die Stellsignalerzeugung berücksichtigt werden. Es ist möglich, dass die Steuereinrichtung, insbesondere zur Schwenk- und/oder Höhenlagensteuerung und/oder für die Stellsignalerzeugung, einen Höhenversatz und/oder einen Versatz in Fahrtrichtung der Verteilmaschine zwischen der Sensorik und dem Verteilgestänge berücksichtigen und/oder herausrechnen kann. Es ist aber auch möglich, dass die Sensorik z. B. im Wesentlichen ohne Höhenversatz zum Verteilgestänge (insbesondere zur Unterkante des Verteilgestänges) und/oder im Wesentlichen ohne Versatz in Fahrtrichtung der Verteilmaschine zum Verteilgestänge positioniert ist. Insbesondere für die Geländemodell- und/oder Signalerzeugung und/oder für die Schwenk- und/oder Höhenlagensteuerung relevante Werte, z. B. Werte zum Höhen- und/oder Längsabstand des Verteilgestänges zur Zielfläche, können somit im Kontext der Erfindung beispielsweise mittelbar ermittelt werden (z. B. mittels der Steuereinrichtung berechnet werden) und/oder unmittelbar ermittelt werden (z. B. mittels der Sensoreinrichtung (zweckmäßig) direkt gemessen werden).

Im Kontext der Erfindung können insbesondere Werte (z. B. Messwerte und/oder Messdaten) in Bezug auf die Zielfläche und/oder das Verteilgestänge beispielsweise direkt ermittelt werden (z. B. direkt gemessen werden) und/oder indirekt ermittelt werden (z. B. anhand gemessener Werte berechnet werden).

Es ist möglich, dass jeder Ausleger-Schwenkachse, jeder Segment-Schwenkachse und/oder der Mittelteil-Schwenkachse jeweils eine ansteuerbare Stelleinrichtung (z. B. Aktor) des Stelleinrichtungssystems zugeordnet ist, und/oder dass den Segmenten Winkellagegeber zur Erfassung und Weiterleitung eines Istwertes bezüglich der Relativposition und/oder Relativschwenklage jeweils benachbarter Segmente zugeordnet sind.

Die Steuereinrichtung kann beispielsweise ausgebildet sein, die Stellsignale an das Steilleinrichtungssystem und/oder die einzelnen Steilleinrichtungen auszugeben, so dass eine Stellbewegung eines Segmentes immer in Relation zu den übrigen Segmenten erfolgen kann.

Die Zielfläche und/oder die Kontur der Zielfläche kann, insbesondere in Längserstreckungsrichtung der Ausleger, quer zur Fahrtrichtung der Verteilmaschine und/oder in Fahrtrichtung der Verteilmaschine vorauseilend, beispielsweise unterschiedliche Höhen, ein sich veränderndes Höhenprofil und/oder Konturänderungen aufweisen.

Die Verteilmaschine umfasst eine Steuereinrichtung, die dazu ausgebildet ist, basierend auf den ersten Messdaten (z. B. in Echtzeit und/oder während des Feldbetriebs) ein Geländemodell, z. B. ein Geländerelief, (insbesondere der vorausliegenden Zielfläche) zu erzeugen, und/oder Stellsignale für das Stelleinrichtungssystem abhängig von den ersten Messdaten und/oder von dem Geländemodell zu erzeugen (beispielsweise um eine Schwenk- und/oder Höhenlage für das Verteilgestänge, insbesondere für das Mittelteil und/oder die Segmente, an eine Kontur der Zielfläche anzupassen, vorzugsweise eine Kontur, die, z. B. in Längserstreckungsrichtung der Ausleger, quer zur Fahrtrichtung der Verteilmaschine und/oder in Fahrtrichtung der Verteilmaschine vorausliegend, unterschiedliche Höhen, Konturänderungen und/oder ein sich veränderndes Höhenprofil aufweist).

Im Kontext der Erfindung ist/sind die Schwenk- und/oder Höhenlagen-Steuerung und/oder die Stellsignale vorzugsweise vorgesehen, um eine Schwenk- und/oder Höhenlage des Mittelteils und/oder der Segmente und somit beispielsweise eine Pose des Verteilgestänges (zweckmäßig unter Berücksichtigung der Freiheitsgrade des Verteilgestänges optimal angenähert) an eine Kontur der Zielfläche zweckmäßig anpassen zu können, wobei vorzugsweise die Zielfläche und/oder deren Kontur, z. B. in Längserstreckungsrichtung der Ausleger und/oder in Fahrtrichtung der Verteilmaschine vorausliegend, insbesondere unterschiedliche Höhen, ein sich veränderndes Höhenprofil und/oder Konturänderungen aufweisen kann.

Es ist möglich, dass die Stellsignale basierend auf den zweiten Messdaten, der Nahbereich-Erfassung und/oder dem zumindest einen zweiten Sensor zur (insbesondere primären und/oder unmittelbaren) Einregelung des Ist-Höhenabstands und/oder der Ist-Schwenklage des Verteilgestänges auf den Soll-Höhenabstand und/oder die Soll-Schwenklage dienen und/oder die Stellsignale basierend auf den ersten Messdaten, der Fernbereich-Erfassung, dem zumindest einen ersten Sensor und/oder den Tendenzen zur (insbesondere vorauseilenden und/oder sekundären) Vorsteuerung und/oder zur Vorbereitung des Stelleinrichtungssystems, beispielsweise deren Hydraulik, dienen, insbesondere zur Vorbereitung auf vorausliegende Höhen- und/oder Schwenklagen-Änderungen des Verteilgestänges.

Vorzugsweise kann sich der Begriff "Steuereinrichtung" z. B. auf eine Datenverarbeitungseinheit, auf eine Elektronik (z. B. ausgeführt als eine Treiberschaltung und/oder mit einem oder mehreren Mikroprozessor(en) und/oder einem oder mehreren Datenspeichern) und/oder auf eine mechanische, pneumatische und/oder hydraulische Steuerung beziehen, die je nach Ausbildung Rechenaufgaben, Steuerungsaufgaben, Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein. Die Steuereinrichtung kann beispielsweise eine oder mehrere Recheneinheit(en) und/oder Steuereinheit(en) umfassen, wobei die einzelnen Rechen- und/oder Steuereinheiten beispielsweise zentral, dezentral und/oder verteilt angeordnet sein können.

Die Erfindung betrifft auch ein Verfahren, vorzugsweise zur Schwenk- und/oder Höhenlagensteuerung eines Verteilgestänges einer landwirtschaftlichen Verteilmaschine, vorzugsweise einer Verteilmaschine wie hierin offenbart.

Die Offenbarung zur Verteilmaschine und/oder die Merkmale der Verteilmaschine gelten vorzugsweise entsprechend für das Verfahren und/oder umgekehrt. Zur Vermeidung von Wiederholungen sollen folglich z. B. vorrichtungsgemäß offenbarte Merkmale auch als verfahrensgemäß offenbart gelten und beanspruchbar sein und/oder umgekehrt.

Die zuvor beschriebenen bevorzugten Ausführungsformen und Merkmale der Erfindung sind zweckmäßig miteinander kombinierbar. Weitere bevorzugte Merkmale, Einzelheiten und Vorteile der Erfindung werden im Folgenden unter Bezugnahme auf die beigefügten Figuren beschrieben. Es zeigen:
- Figur 1: eine schematische Hinteransicht einer Verteilmaschine gemäß einem Ausführungsbeispiel der Erfindung;
- Figur 2: eine Illustration einer Schwenk- und/oder Höhenlagen-Anpassung eines Verteilgestänges an eine Kontur einer Zielfläche gemäß Stand der Technik;
- Figur 3: eine Illustration einer Schwenk- und/oder Höhenlagen-Anpassung eines Verteilgestänges an eine Kontur einer Zielfläche gemäß einer Ausführungsform der Erfindung;
- Figur 4: eine Illustration einer Schwenk- und/oder Höhenlagen-Anpassung eines Verteilgestänges an eine Kontur einer Zielfläche gemäß Stand der Technik;
- Figur 5: eine Illustration einer Schwenk- und/oder Höhenlagen-Anpassung eines Verteilgestänges an eine Kontur einer Zielfläche gemäß einer Ausführungsform der Erfindung;
- Figur 6: ein schematisches Blockdiagramm zur Illustration einer Schwenk- und/oder Höhenlagen-Anpassung eines Verteilgestänges an eine Kontur einer Zielfläche gemäß einer Ausführungsform der Erfindung;
- Figur 7: eine Illustration einer Fernbereich-Erfassung und einer Nahbereich-Erfassung einer Zielfläche gemäß einer Ausführungsform der Erfindung; und
- Figur 8: eine Illustration eines in Sektoren, insbesondere Messsektoren, unterteilten Erfassungsbereichs einer Sensorik gemäß einer Ausführungsform der Erfindung.

Die in den Figuren gezeigten Ausführungsformen stimmen teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

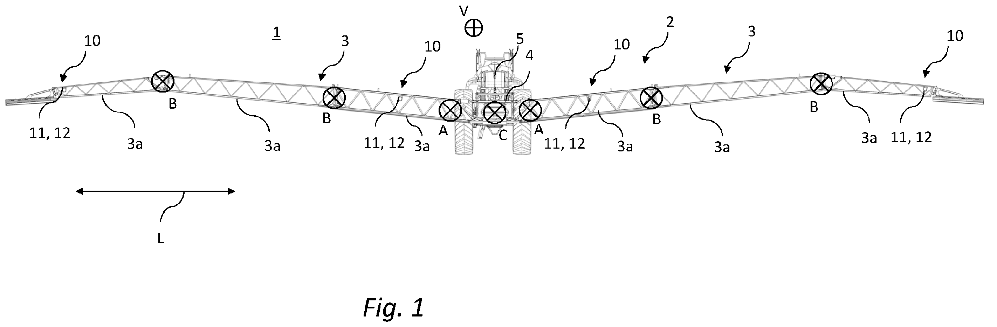

Die Figur 1 zeigt eine landwirtschaftliche Verteilmaschine 1 gemäß einer Ausführungsform der Erfindung.

Die Verteilmaschine 1 ist vorzugsweise eine Feldspritze, kann aber auch z. B. ein pneumatischer Düngerstreuer sein.

Die Verteilmaschine 1 umfasst ein Verteilgestänge 2 zum Ausbringen von z. B. festem, flüssigem und/oder granulatartigem Verteilmaterial (z. B. Düngemittel, Pflanzenschutzmittel oder Saatgut).

Das Verteilgestänge 2 umfasst zwei seitliche Ausleger 3 und ein Mittelteil 4, die vorzugsweise jeweils eine Mehrzahl von Ausbringelementen zum Ausbringen des Verteilmaterials aufweisen.

Das Bezugszeichen 5 kennzeichnet ein Trägerfahrzeug der Verteilmaschine 1.

Das Bezugszeichen V kennzeichnet die Fahrtrichtung der Verteilmaschine 1, insbesondere deren Arbeits- und/oder Vorwärtsrichtung. In Figur 1 verläuft die Fahrtrichtung V orthogonal in die Zeichenebene hinein.

Jeder Ausleger 3 ist mittels einer Ausleger-Schwenkachse A mit dem Mittelteil 4 schwenkbar verbunden.

Jeder Ausleger 3 umfasst zumindest zwei Segmente (Ausleger-Segmente) 3a, wobei die zumindest zwei Segmente 3a des einen Auslegers 3 jeweils mittels einer Segment-Schwenkachse B schwenkbar miteinander verbunden sind und wobei die zumindest zwei Segmente 3a des anderen Auslegers 3 jeweils mittels einer Segment-Schwenkachse B schwenkbar miteinander verbunden sind.

Dies bedeutet, dass die Ausleger 3 jeweils, in Längserstreckungsrichtung L der Ausleger 3 gesehen, durch mehrere mittels Gelenken miteinander verbundene Segmente 3a zusammengesetzt sein können.

Das Mittelteil 4 ist, z. B. mittels eines Parallelogrammgestänges, insbesondere im Wesentlichen senkrecht anhebbar und absenkbar, sodass somit auch das Verteilgestänge 2, insbesondere im Wesentlichen senkrecht anhebbar und absenkbar ist.

Das Mittelteil 4 kann vorzugsweise um eine Mittelteil-Schwenkachse C schwenkbar sein.

Das Bezugszeichen C kennzeichnet somit eine optionale Schwenkachse des Mittelteils 4, um die das Mittelteil 4 und somit die Ausleger 3 und/oder das Verteilgestänge 2 optional schwenkbar sind.

Die Ausleger-Schwenkachsen A und die Segment-Schwenkachsen B können vorzugsweise durch ein Gelenk (z. B. Dreh- und/oder Schwenkgelenk) erzeugt und/oder definiert werden. Alternativ oder ergänzend kann die Mittelteil-Schwenkachse C vorzugsweise durch ein Gelenk (z. B. Dreh-und/oder Schwenkgelenk) erzeugt und/oder definiert werden.

Die Ausleger-Schwenkachsen A und die Segment-Schwenkachsen B erstrecken sich vorzugsweise (zweckmäßig im Wesentlichen) parallel zueinander und/oder (zweckmäßig im Wesentlichen) parallel zur Fahrtrichtrichtung V der Verteilmaschine 1. Alternativ oder ergänzend kann sich die Mittelteil-Schwenkachse C (zweckmäßig im Wesentlichen) parallel zu den Ausleger-Schwenkachsen A, den Segment-Schwenkachsen B und/oder der Fahrtrichtung V der Verteilmaschine 1 erstrecken.

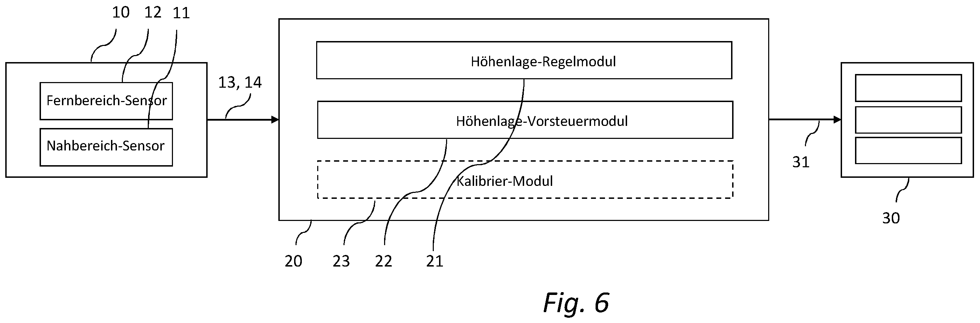

Die Verteilmaschine 1 umfasst ein ansteuerbares, in Figur 6 schematisch illustriertes Stelleinrichtungssystem 30.

Das Stelleinrichtungssystem 30 kann beispielsweise ähnlich wie in der EP 2 186 405 A1 beschrieben aufgebaut und/oder ansteuerbar sein und insbesondere einen oder mehrere Aktoren, Stelleinrichtungen und/oder Stellzylinder umfassen, zur Veränderung einer Schwenk- und/oder Höhenlage der Ausleger 3 und/oder der Segmente 3a, wodurch z. B. eine Pose des Verteilgestänges 3 veränderbar ist.

Das Stelleinrichtungssystem 30 ist insbesondere ausgebildet zur Veränderung einer Schwenk-und/oder Höhenlage des Mittelteils 4 und/oder der Segmente 3a relativ zu einer zu bearbeitenden landwirtschaftlichen Zielfläche Z (z. B. eine Bodenoberfläche und/oder Bestandsoberfläche, insbesondere Pflanzenbestandsoberfläche).

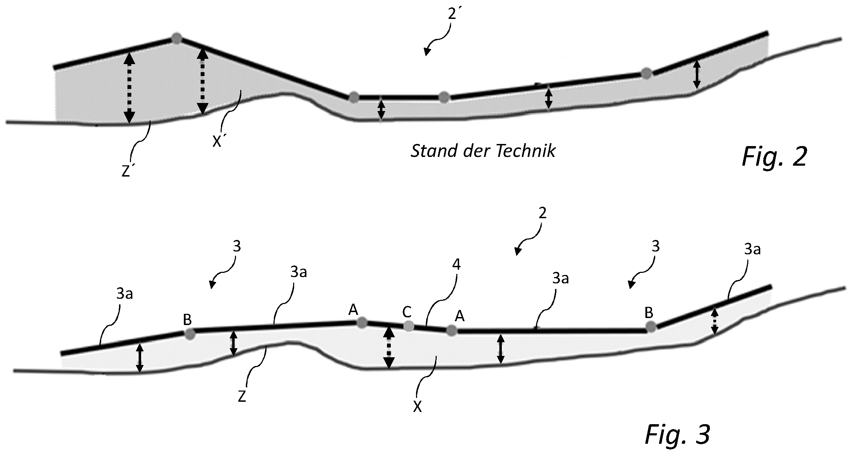

Eine beispielhafte Zielfläche Z ist z. B. in den Figuren 3, 5 und 7 schematisch illustriert. Die Zielfläche Z und/oder deren Kontur kann, z. B. in Längserstreckungsrichtung L der Ausleger 3, quer zur Fahrtrichtung V und/oder in Fahrtrichtung V vorausliegend, Konturänderungen, unterschiedliche Höhen und/oder ein sich veränderndes Höhenprofil aufweisen.

Die Schwenk- und/oder Höhenlagen-Steuerung und/oder die weiter unten beschriebenen Stellsignale 31 (siehe z. B. Figur 6) ist/sind folglich insbesondere vorgesehen, um die Schwenk- und/oder Höhenlage des Mittelteils 4 und/oder der Segmente 3a und somit zweckmäßig eine Pose des Verteilgestänges 3 möglichst optimal an die Kontur der Zielfläche Z anpassen zu können, wobei die Zielfläche Z und/oder die Kontur wie zuvor beschrieben ausgebildet sein.

Insbesondere ist das Stelleinrichtungssystem 30 (vorzugsweise abhängig von dem unten erörterten Geländemodell und/oder den unten erörterten Stellsignalen 31) ausgebildet:
- zum (insbesondere im Wesentlichen vertikalen) Anheben und Absenken des Mittelteils 4 und somit der Ausleger 3,
- zum Verschwenken (z. B. Drehen) des Mittelteils 4 um die Mittelteil-Schwenkachse C,
- zum Verschwenken (z. B. Drehen) der Ausleger 3 um die Ausleger-Schwenkachsen A, also insbesondere relativ zum Mittelteil 4 und/oder
- zum Verschwenken der Segmente 3a um die Segment-Schwenkachsen B.

Die Schwenk- und/oder Höhenlage-Veränderungen können insbesondere zeitgleich und/oder zeitversetzt erfolgen, zweckmäßig in Abhängigkeit der Kontur und/oder der Konturänderung der insbesondere vorausliegenden Zielfläche Z.

Die Verteilmaschine 1 umfasst Sensorik 10 zur Erfassung (z. B. zum Scannen, Abtasten und/oder Messen) der Zielfläche Z. Die Sensorik 10 umfasst insbesondere Radarsensorik und z. B. einen dreidimensionalen Erfassungsbereich.

Die Sensorik 10 kann z. B. einen oder mehrere Sensoren 11, 12 und/oder Sensoren-Paare 11, 12 umfassen, z. B. zumindest einen ersten Sensor 12 und/oder zumindest einen zweiten Sensor 11.

Der erste Sensor 12 kann z. B. ein Fernbereich-Sensor sein, insbesondere zur Fernbereich-Erfassung der Zielfläche Z.

Der zweite Sensor 11 kann z. B. ein Nahbereich-Sensor sein, insbesondere zur Nahbereich-Erfassung der Zielfläche Z.

Die Sensorik 10 kann beispielsweise zumindest einen ersten Sensor 12 umfassen, zur Nahbereich-und Fernbereich-Erfassung.

Die Sensorik 10 ist insbesondere dazu ausgebildet, die (insbesondere vorausliegende) Zielfläche Z (insbesondere sensorisch) zu erfassen (z. B. abzutasten, zu messen, zu scannen und/oder zu detektieren) und basierend auf der erfassten Zielfläche Z erste Messdaten zu generieren (z. B. zu sammeln, aufzuzeichnen und/oder zu registrieren), vorzugsweise um vorausliegende Werte zum Höhenabstand des Verteilgestänges 1 zur Zielfläche Z und/oder eine vorausliegende Kontur der Zielfläche Z (z. B. mittelbar oder unmittelbar und/oder vorauseilend) zu ermitteln (z. B. zu messen, zu erfassen, zu bestimmen, zu berechnen und/oder zu beschreiben). Die vorausliegende Zielfläche und/oder die vorausliegende Kontur kann wie bereits zuvor beschrieben ausgebildet sein.

Die Sensorik 10 ist vorzugsweise dazu ausgebildet, die insbesondere vorausliegende Zielfläche und/oder ein Verteilgestänge-Vorfeld der Zielfläche Z vorauseilend (zweckmäßig vorausschauend) zu erfassen.

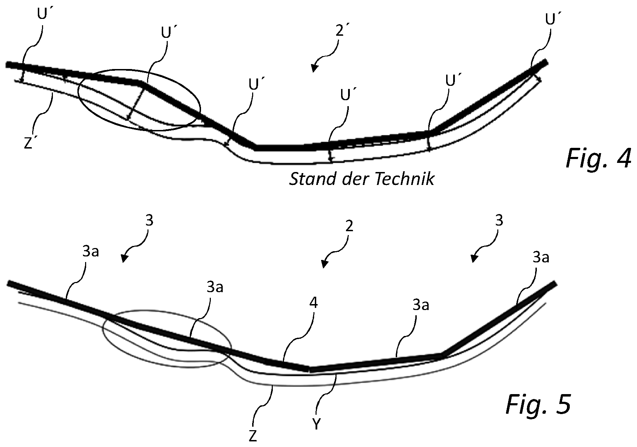

Die Verteilmaschine 1 umfasst eine (z. B. in Figur 6 schematisch und beispielhaft illustrierte) Steuereinrichtung 20, die dazu ausgebildet ist, basierend auf den ersten Messdaten ein Geländemodell, z. B. ein Geländerelief, (insbesondere der vorausliegenden Zielfläche Z) zu erzeugen, und/oder Stellsignale 31 für das Stelleinrichtungssystem 30 abhängig von den ersten Messdaten und/oder von dem Geländemodell zu erzeugen, wodurch insbesondere eine Schwenk- und/oder Höhenlage für das Verteilgestänge 2, insbesondere für das Mittelteil 4und/oder die Segmente 3a, an eine Kontur der Zielfläche Z anpassbar ist, die (z. B. in Längserstreckungsrichtung L der Ausleger 3 und/oder in Fahrtrichtung V vorausliegend) unterschiedliche Höhen, Konturänderungen und/oder ein sich veränderndes Höhenprofil aufweisen kann (siehe z. B. Figuren 3 und 5).

Die Steuereinrichtung 20 kann z. B. Steuer- und/oder Regelungsaufgaben übernehmen und/oder eine Steuer- und/oder Regelungseinrichtung sein, zweckmäßig mit und/oder ohne Rückkopplung.

Das Geländemodell ist und/oder umfasst vorzugsweise ein Geländerelief.

Die Sensorik 10 kann beispielweise dazu ausgebildet sein, die (insbesondere vorausliegende) Zielfläche Z über die (insbesondere im Wesentlichen) gesamte Arbeitsbreite der zwei Ausleger 3 oder über die (insbesondere im Wesentlichen) gesamte Arbeitsbreite des Verteilgestänges 2 (vorzugsweise sensorisch) zu erfassen und vorzugsweise basierend hierauf die ersten Messdaten zu generieren, sodass das Geländemodell die insbesondere vorausliegende Zielfläche Z über die im Wesentlichen gesamte Arbeitsbreite der zwei Ausleger 3 oder über die im Wesentlichen gesamte Arbeitsbreite des Verteilgestänges 2 umfassen (z. B. abbilden) kann und/oder die Stellsignale 31 unter Berücksichtigung der Zielfläche Z und insbesondere des Verteilgestänge-Vorfeld über die gesamte Arbeitsbreite der zwei Ausleger 3 oder die gesamte Arbeitsbreite des Verteilgestänges 3 erzeugt werden können.

Somit ist es insbesondere möglich, dass das Geländemodell das Verteilgestänge-Vorfeld der Zielfläche Z über die im Wesentlichen gesamte Arbeitsbreite der zwei Ausleger 2 oder über die im Wesentlichen gesamte Arbeitsbreite des Verteilgestänges 3 umfassen kann und/oder die Steuereinrichtung 20 zur Erzeugung der Stellsignale 31 das Verteilgestänge-Vorfeld der Zielfläche Z über die im Wesentlichen gesamte Arbeitsbreite der zwei Ausleger 3 oder über die im Wesentlichen gesamte Arbeitsbreite des Verteilgestänges 2 berücksichtigen kann.

Die Steuereinrichtung 20 ist insbesondere ausgebildet ist, die Stellsignale 31 für das Stelleinrichtungssystem 30 zu erzeugen, bevor das Verteilgestänge 2 eine vorausliegende Höhenänderung und/oder Konturänderung der Zielfläche Z erreicht und/oder um eine Reaktionszeit bei der Schwenk- und/oder Höhenlagensteuerung des Verteilgestänges 2 zumindest teilweise zu kompensieren.

Die Steuereinrichtung 20 ist insbesondere ausgebildet ist, die Stellsignale 31 abhängig von den ersten Messdaten und/oder von dem Geländemodell zu erzeugen und so zu konfigurieren, dass eine Schwenk- und/oder Höhenlage des Mittelteils 4 und/oder der Segmente 3a und somit insbesondere eine Pose des Verteilgestänges 2 möglichst optimal an eine wie z. B. in den Figuren 3 und 5 gezeigte Kontur der Zielfläche Z angepasst werden kann.

Die Stellsignale 31 können somit beispielsweise Stellsignale umfassen,
- um eine Schwenklagen-Veränderung der Ausleger 3 um die Ausleger-Schwenkachsen A zu bewirken,
- um eine Schwenklagen-Veränderung der Segmente 3a um die Segment-Schwenkachsen B zu bewirken,
- um ein, insbesondere im Wesentlichen vertikales, Anheben und Absenken des Mittelteils 4 zu bewirken, und/oder
- um eine Schwenklagen-Veränderung des Mittelteils 4 um die Mittelteil-Schwenkachse C zu bewirken.

Die Erzeugung der Stellsignale 31 kann insbesondere zeitgleich und/oder zeitversetzt erfolgen, zweckmäßig in Abhängigkeit der Kontur und/oder der Konturänderung der insbesondere vorausliegenden Zielfläche Z.

Die Figuren 2 und 4 illustrieren eine Schwenk- und/oder Höhenlagen-Anpassung eines Verteilgestänges 2' an eine Kontur einer Zielfläche Z' gemäß Stand der Technik.

Die Figur 3 und 5 illustrieren eine Schwenk- und/oder Höhenlagen-Anpassung eines Verteilgestänges 2 an eine Kontur einer Zielfläche Z gemäß einer Ausführungsform der Erfindung.

Die Kontur der Zielfläche Z' in den Figuren 2 und 4 ist identisch zur Kontur der Zielfläche Z der Figur 3 und 5. Ebenso sind die Ausleger des Verteilgestänges 2' der Figuren 2 und 4 identisch zu den Auslegern 3 des Verteilgestänges 2 der Figuren 3 und 5.

Im Beispiel der Figur 2 und 4 ist das Mitteilteil des Verteilgestänges 2' nicht schwenkbar.

Im Beispiel der Figuren 2 und 4 wurde die Kontur der Zielfläche Z' mittels z. B. Ultraschallsensoren U' nur punktuell erfasst und somit nicht über das gesamte Verteilgestänge-Vorfeld der Zielfläche Z'. Zwischen den Ultraschallsensoren U' und/oder deren Erfassungsstellen kann das Verteilgestänge 2' deshalb z. B. zu tief oder zu hoch über der Zielfläche Z' geführt werden.

Das Bezugszeichen X' kennzeichnet eine Abstandsfläche zwischen dem Verteilgestänge 2' und der Zielfläche Z'.

Das Bezugszeichen X kennzeichnet eine Abstandsfläche zwischen dem Verteilgestänge 2 und der Zielfläche Z.

Die Steuereinrichtung 20 ist insbesondere dazu ausgebildet sein, abhängig von dem Geländemodell und insbesondere abhängig von den Freiheitsgraden des Verteilgestänges 2 eine (z. B. iterativ und/oder näherungsweise) an eine Kontur (z. B. Ist-Kontur und/oder vorausliegende Kontur) der Zielfläche Z angepasste Schwenk- und/oder Höhenlage (z. B. Pose) für das Verteilgestänge 2 zu berechnen und vorzugsweise die Stellsignale 31 basierend auf der angepassten Schwenk- und/oder Höhenlage (z. B. Pose) für das Verteilgestänges 2 zu erzeugen.

Die angepasste Schwenk- und/oder Höhenlage des Verteilgestänges 2 kann insbesondere iterativ und/oder näherungsweise (z. B. optimal und/oder maximal) an die Kontur der Zielfläche Z angenähert (z. B. angepasst) werden.

Alternativ oder ergänzend kann die angepasste Schwenk- und/oder Höhenlage des Verteilgestänges 2 so konfiguriert sein, dass eine mittlere (z. B. durchschnittliche) Abstandshöhe des Verteilgestänges 2 zur Kontur der Zielfläche Z minimiert und/oder reduziert wird.

Alternativ oder ergänzend kann die angepasste Schwenk- und/oder Höhenlage des Verteilgestänges 2 so konfiguriert sein, dass die Abstandsfläche X zwischen dem Verteilgestänge 2 und der Kontur der Zielfläche Z minimiert und/oder reduziert wird.

Dadurch kann vorzugsweise die Schwenk- und/oder Höhenlage des Verteilgestänges 3 und damit insbesondere eine Verteilgestänge-Pose (z. B. iterativ und/oder näherungsweise) optimal und/oder maximal an eine Kontur (z. B. Ist-Kontur und/oder vorausliegende Kontur) der Zielfläche Z angepasst werden.

Die insbesondere mittels der Steuereinrichtung 20 durchgeführte Berechnung der an die Kontur der Zielfläche Z angepassten Schwenk- und/oder Höhenlage (z. B. Pose) des Verteilgestänges 2 und/oder die Erzeugung der Stellsignale 31 kann beispielsweise mittels eines Näherungs- und/oder Iterations-Verfahrens und/oder einem Näherungs- und/oder Optimierungsalgorithmus erfolgen (z. B. mittels einem Newton-, Gradienten- und/oder Evolutions-Verfahren und/oder -Algorithmus).

Die insbesondere optimal an eine Kontur der Zielfläche Z angepasste Schwenk- und/oder Höhenlage des Verteilgestänges 2 kann somit über ein Rechenverfahren und/oder einen Optimierungsalgorithmus f ermittelt (z. B. berechnet) werden, wobei das Rechenverfahren und/oder der Optimierungsalgorithmus zweckmäßig alle relevanten Informationen G aus dem Geländemodell zusammen zu einer Menge aus Soll-Schwenk- und/oder Höhenlagen (z. B. Verteilgestängesollpositionen und/oder Verteilgestängesollschwenklagen) *aᵢ* für *n* Freiheitsgrade berechnen kann. $\left({a}_{1},{a}_{2},…,{a}_{n}\right) = f \left(G\right)$

Die Steuereinrichtung 20 ist somit insbesondere dazu ausgebildet, eine Schwenk- und/oder Höhenlage für das Verteilgestänge 2 abhängig von dem Geländemodell und zumindest einem von folgendem zu berechnen und/oder die Stellsignale 31 abhängig von dem Geländemodell und zumindest einem von folgenden zu erzeugen:
- den Schwenkfreiheitsgraden um die Ausleger-Schwenkachsen A,
- den Schwenkfreiheitsgraden um die Segment-Schwenkachsen B,
- dem Schwenkfreiheitsgrad des Mittelteils 4 um die Mittelteil-Schwenkachse C,
- dem Höhenfreiheitsgrad des Mittelteils 4,
- der Ist-Schwenk- und/oder Höhenlage des Verteilgestänges 2,
- der Geometrie des Verteilgestänges 2 (z. B. Position der Schwenkfreiheitsgrade, Länge der Segmente 3a und/oder des Mittelteils 4 etc.), und/oder
- einem Mindest-Sollabstand des Verteilgestänges 2 zur Kontur der Zielfläche Z, wobei vorzugsweise der Mindest-Sollabstand durch eine Sollkurve Y (siehe Figur 5) definiert werden kann, die durch die Steuereinrichtung 20 ermittelbar ist und/oder die im Wesentlichen parallel beabstandet zur Kontur der Zielfläche Z verläuft.

Bei einem z. B. aus vier Segmenten 3a und einem optional schwenkbaren Mittelteil 4 zusammengesetzten Verteilgestänge 2 ergeben sich insbesondere folgende Freiheitsgrade: Rotation des Mittelteils 4 + Rotation um vier Schwenkachsen A, B + vorzugsweise Höhenveränderung des Mittelteils 4.

Ein Vergleich insbesondere der Figuren 2 und 4 mit den Figuren 3 und 5 zeigt, dass im Ausführungsbeispiel der Figuren 3 und 5 die Schwenk- und/oder Höhenlage und somit die Pose des Verteilgestänges 2 deutlich genauer an die Kontur der Zielfläche Z angepasst und somit angenähert ist.

Im Kontext der Erfindung ist es insbesondere möglich, dass die Schwenk- und/oder Höhenlage des Mittelteils 4 und/oder der Segmente 3a und/oder eine mittlere (z. B. durchschnittliche) Abstandshöhe der Segmente 3a und vorzugsweise des Mittelteils 4 oder allgemein des Verteilgestänges 2 relativ zur Zielfläche Z optimiert wird.

Dies kann zwar möglicherweise dazu führen, dass an einzelnen Positionen der Segmente 3a und/oder des Mitteilteils 4 sich die Abstandshöhe (z. B. insoweit nachteilig) erhöht, die durchschnittliche Abstandshöhe der Segmente 3a und vorzugsweise des Mittelteils 4 oder allgemein des Verteilgestänges 2 jedoch optimiert, insbesondere reduziert und/oder minimiert wird.

Aus einem Vergleich der Figuren 2 und 4 mit den Figuren 3 und 5 ergibt sich, dass eine mittlere (z. B. durchschnittliche) Abstandshöhe des Verteilgestänges 2 zur Kontur der Zielfläche Z im Vergleich zur mittleren Abstandshöhe des Verteilgestänges 2' zur Kontur der Zielfläche Z' minimiert und/oder reduziert ist. Alternativ oder ergänzend ist eine Abstandsfläche X zwischen dem Verteilgestänge 2 und der Kontur der Zielfläche Z im Vergleich zur Abstandsfläche X' zwischen dem Verteilgestänge 2' und der Kontur der Zielfläche Z' minimiert und/oder reduziert.

Es sei darauf hingewiesen, dass die optimale Schwenk- und/oder Höhenlage des Verteilgestänges 2 in Abhängigkeit der Art der Verteilmaschine 1 (z.B. Düngersteuer oder Feldspritze) und/oder der Art der Applikation des Verteilmaterials (z.B. Band-Applikation, Flächen-Applikation und/oder Spot-Applikation etc.) variieren kann.

Figur 6 illustriert beispielhaft die Sensorik 10, die Steuereinrichtung 20 und das mittels der Stellsignale 31 ansteuerbare Stelleinrichtungssystem 30.

Die Steuereinrichtung 20 kann z. B. ein Höhenlage-Regelmodul 21, ein Höhenlage-Vorsteuermodul 22 und ein Kalibrier-Modul 23 umfassen. Bezugszeichen 13 kennzeichnet Messdaten (z. B. Messwerte) von der Sensorik 10, beispielsweise von einem Nahbereich-Sensor 11, wobei Bezugszeichen 14 ebenfalls Messdaten (z. B. Messwerte) von der Sensorik 10 kennzeichnet, beispielsweise von einem Fernbereich-Sensor 12.

Die Schwenk- und/oder Höhenlagen-Steuerung kann insbesondere folgende Schritte umfassen:
Die Sensorik 10 (z. B. eine Radar-Sensorik) liefert zyklisch dreidimensionale Koordinaten (Locations) von erfassten reflektierenden Objekten der Zielfläche Z.

Die Locations werden unter Berücksichtigung der aktuellen Position der Sensorik 10 und/oder der aktuellen Position und/oder Lage des Verteilgestänges 2 in ein Verteilmaschinen-Koordinatensystem (z. B. Fahrzeugkoordinatensystem) übertragen.

Aus diesen Locations wird dann ein Geländemodell für das Verteilgestänge-Vorfeld, insbesondere die vorausliegende Zielfläche Z, berechnet.

Anschließend wird für die jeweilige Zielflächenkontur eine passende Soll-Schwenk- und/oder Höhenlage für das Verteilgestänge 2 berechnet, sodass vorzugsweise hierauf basierend die Stellsignale 31 erzeugt werden können.

Anschließend wird die passende Soll-Schwenk- und/oder Höhenlage über Positionsregler des Stelleinrichtungssystems 30, insbesondere geeigneter Aktorik, angefahren.

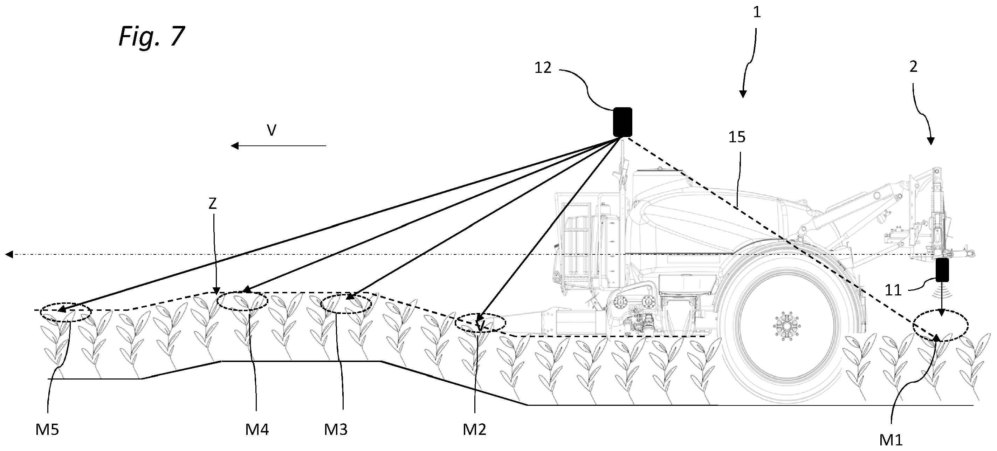

Die Figur 7 illustriert eine Fernbereich-Erfassung und eine Nahbereich-Erfassung einer Zielfläche Z mittels der Sensorik 10 gemäß einer Ausführungsform der Erfindung.

Die Sensorik 10 ist insbesondere dazu ausgebildet, mittels einer Fernbereich-Erfassung der Zielfläche Z, z. B. mittels zumindest eines Fernbereich-Sensors 12, die ersten Messdaten zu generieren, um eine vorausliegende Kontur der Zielfläche Z und somit insbesondere das Verteilgestänge-Vorfeld (z. B. mittelbar oder unmittelbar) zu ermitteln.

Die Sensorik 10 ist insbesondere dazu ausgebildet, mittels einer Nahbereich-Erfassung, z. B. mittels zumindest eines Nahbereich-Sensor 11, zweite Messdaten zu generieren, um eine Nahbereich-Kontur, insbesondere Ist-Kontur, der Zielfläche Z (z. B. mittelbar oder unmittelbar) zu ermitteln, wobei die Fernbereich-Erfassung und/oder der Fernbereich - in Fahrtrichtung V der Verteilmaschine 1 gesehen - zumindest teilweise der Nahbereich-Erfassung und/oder dem Nahbereich vorauseilt.

Es sind Ausführungsbeispiele möglich, bei denen der zumindest eine Fernbereich-Sensor 12 (z. B. Radarsensor) nicht nur für die Fernbereich-Erfassung, sondern ebenfalls für die Nahbereich-Erfassung der Zielfläche Z ausgebildet ist, sodass eine Trennung zwischen Fernbereich-Sensor und Nahbereich-Sensor zwar möglich, aber nicht unbedingt erforderlich ist.

Die ersten und/oder zweiten Messdaten können insbesondere dreidimensionale Koordinaten der Zielfläche Z liefern.

Das durch die Steuereinrichtung 20 erzeugte Geländemodell ist vorzugsweise dreidimensional, in Sektoren unterteilt und/oder kann insbesondere auf den ersten Messdaten und/oder auf den dreidimensionalen Koordinaten der Zielfläche Z basieren.

Die Steuereinrichtung 20 kann dazu ausgebildet sein, die ersten und/oder zweiten Messdaten in ein Koordinatensystem mit einem Geländemodell-Raster und/oder Geländemodell-Sektoren zu übertragen und vorzugsweise abhängig von dem Koordinatensystem die Stellsignale 31 zu erzeugen und/oder die Schwenk- und/oder Höhenlage für das Verteilgestänge 2 zu berechnen.

Außerdem kann die Steuereinrichtung 20 dazu ausgebildet sein, das Geländemodell und/oder die ersten Messdaten unter Berücksichtigung der Ist-Position der Sensorik 10 und/oder der Ist-Schwenk- und/oder Höhenlage des Verteilgestänges 2, in oder auf ein, vorzugsweise dreidimensionales, Verteilmaschinen- und/oder Verteilgestänge-Koordinatensystem zu übertragen und vorzugsweise abhängig von dem Verteilmaschinen- und/oder Verteilgestänge-Koordinatensystem die Stellsignale 31 zu erzeugen und/oder die Schwenk- und/oder Höhenlage für das Verteilgestänge 2 zu berechnen.

Die Verfügbaren Daten (z.B. Höhenlagen) können somit in ein Koordinatensystem (z.B. mit einem Raster von beispielsweise 1x1m) eingetragen werden. Sollten bspw. einzelne Punkte des Rasters fehlen, können diese beispielsweise berechnet werden. Ebenso können die jeweiligen Rasterpunkte anhand mehrerer weiterer Datenpunkte validiert und/oder auf deren Plausibilität geprüft werden. Mit den somit erzeugbaren Rastern kann zweckmäßig das Geländemodell erzeugt und berechnet werden, welches anschließend für die Schwenk- und/oder Höhenlagen-Steuerung des Verteilgestänges 2 verwendet werden kann.

Außerdem kann die Steuereinrichtung 20 dazu ausgebildet sein, basierend auf dem Geländemodell, den ersten Messdaten und/oder der Fernbereich-Erfassung das Stelleinrichtungssystem 30 z. B. mittels der Stellsignale 31 vorauseilend voranzusteuern, vorzugsweise um es auf bevorstehende Veränderungen der Schwenk- und/oder Höhenlage des Verteilgestänges 2 vorzubereiten. Alternativ oder ergänzend kann die Steuereinrichtung 20 dazu ausgebildet sein, basierend auf den zweiten Messdaten und/oder der Nahbereich-Erfassung das Stelleinrichtungssystems 30 z. B. mittels der Stellsignale 31 anzusteuern, um die Schwenk- und/oder Höhenlage des Verteilgestänges 2 zweckmäßig primär, gezielt und/oder unmittelbar an die Nahbereich-Kontur der Zielfläche Z anzupassen.

Die Nahbereich-Erfassung mittels der Sensorik 10 dient insbesondere zur Nahbereich-Erfassung der Zielfläche Z, z. B. eines Nahbereichs und/oder Ist-Bereichs der Zielfläche Z senkrecht unterhalb des Verteilgestänges 3 und/oder in Fahrtrichtung V der Verteilmaschine 1 vorzugsweise direkt vor dem Verteilgestänge 3. In Figur 7 kennzeichnet das Bezugszeichen M1 beispielhaft einen Nahbereich, eine Nahbereich-Messstelle und/oder eine Nahbereich-Erfassung.

Die Fernbereich-Erfassung mittels der Sensorik 10 dient insbesondere zur Erfassung eines Fernbereichs der Zielfläche Z, zweckmäßig in Fahrtrichtung V der Verteilmaschine 1 (z. B. relativ weit entfernt) vor dem Verteilgestänge 2. In Figur 7 kennzeichnen die Bezugszeichen M2 bis M5 beispielhaft Fernbereich-Messstellen, Fernbereiche und/oder eine Fernbereich-Erfassung.

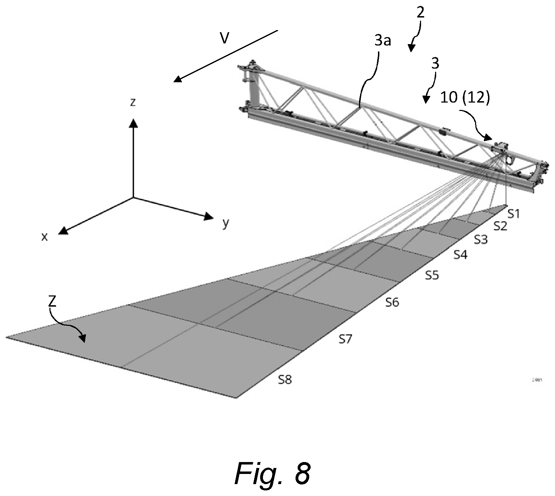

Die Sensorik 10, insbesondere der als Radarsensor ausgebildete Fernbereich-Sensor 12, ist vorzugsweise dazu ausgebildet, die vorausliegende Kontur der Zielfläche Z und/oder den Höhenabstand des Verteilgestänges 2 zur Zielfläche Z an mehreren Messstellen M2, M3, M4, M5, die in Fahrtrichtung V voneinander beabstandet sind, zweckmäßig gleichzeitig zu messen. Die Messstellen M2 bis M5 und optional M1 können beispielsweise auch als Messsektoren ausgebildet sein, wie z. B. in Figur 8 illustriert.

Beispielsweise kann die Steuereinrichtung 20 dazu ausgebildet sein, abhängig von der Fahrgeschwindigkeit der Verteilmaschine 1 oder einer hiervon abgeleiteten Größe aus den mehreren Messstellen M2, M3, M4, M5 zumindest eine Messstelle auszuwählen. Bei langsamen Fahrgeschwindigkeiten kann z. B. die Messstelle M2 als die nächstliegende Messstelle verwendet werden, die in Fahrtrichtung V vorausliegt. Je näher die Messstelle, desto genauer ist das Höhenprofil der Zielfläche Z bestimmbar. Mit zunehmender Fahrgeschwindigkeit reicht die Reaktionszeit für eine Anpassung der Gestängelage nicht mehr aus, so dass zweckmäßig eine weiter vorausliegende Messstelle M3, M4, oder M5 ausgewählt wird.

Der Fernbereich-Sensor 12 ist beispielhaft am Trägerfahrzeug 5 angeordnet. Er kann jedoch auch am Verteilgestänge 2 angeordnet sein, z. B. an einer Stelle oberhalb des Nahbereich-Sensors 11. Die weiteren Aspekte dieser Ausführungsvariante können denen entsprechen, wie sie in den vorherigen Figuren beschrieben sind.

In einer weiteren Ausführungsvariante kann der Fernbereich-Sensor 12 zusätzlich als Nahbereich-Sensor verwendet werden, also sowohl für die Fernbereich-Erfassung als auch die Nahbereich-Erfassung, insbesondere, wenn eine seiner Messstellen (in Figur 7 beispielhaft die Messstelle M1) auf einen Nahbereich der Zielfläche Z gerichtet ist, z. B. vertikal unterhalb des Verteilgestänges 2 und/oder in Fahrtrichtung V im Wesentlichen direkt vor dem Verteilgestänge 2, was in Figur 7 durch die gestrichelte Linie 15 dargestellt ist. In diesem Fall könnte optional auf einen separaten Nahbereich-Sensor 11 verzichtet werden.

Die Sensorik 10 kann wie bereits erwähnt ausgebildet sein, um insbesondere mittels der Fernbereich-Erfassung ein Verteilgestänge-Vorfeld der Zielfläche Z vorzugsweise nicht nur punkt- und/oder stellenweise, sondern insbesondere über die im Wesentlichen gesamte Arbeitsbreite der zwei Ausleger 3 oder über die im Wesentlichen gesamte Arbeitsbreite des Verteilgestänges 2 zu erfassen (z. B. abzutasten, zu messen und/oder zu scannen), sodass das Geländemodell das Verteilgestänge-Vorfeld über die im Wesentlichen gesamte Arbeitsbreite der zwei Ausleger 3 oder über die im Wesentlichen gesamte Arbeitsbreite des Verteilgestänges 2 zweckmäßig umfassen kann. Hierzu kann die Sensorik 10 beispielsweise mehrere über das Verteilgestänge 2 verteilt angeordnete Sensoren 11, 12 umfassen.

Figur 8 zeigt eine schematische Illustration eines in Sektoren S1-S8, insbesondere Messsektoren, unterteilten Erfassungsbereichs (z. B. Sichtbereichs) der Sensorik 10 gemäß einer Ausführungsform der Erfindung, beispielsweise des zumindest einen Fernbereich-Sensors 12.

Wie in Figur 8 illustriert, kann der Erfassungsbereich (z. B. Sichtbereich) der Sensorik 10 insbesondere zur Erfassung der vorausliegenden Geländekontur der Zielfläche Z optional in mehrere Messstellen S1-S8, beispielsweise in mehrere Sektoren / Messsektoren S1-S8, unterteilt sein, die in Fahrtrichtung V der Verteilmaschine 1 unterschiedlich weit von dem Verteilgestänge 2 und/oder der Sensorik 10 beabstandet sind.

Beispielhaft ist der Erfassungsbereich, insbesondere das Sichtfeld, hier in acht Sektoren S1-S8 unterteilt. Es können jedoch auch mehr oder weniger Sektoren sein. Die Sensorik 10 ist z. B. an einem der seitlichen Ausleger 3 angeordnet, derart, dass das Trägerfahrzeug 5 im Falle einer gezogenen Verteilmaschine 1 nicht den Erfassungsbereich der Sensorik 10 beeinträchtigt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart.

## Patentansprüche

1. Verteilmaschine (1), vorzugsweise Feldspritze oder pneumatischer Düngerstreuer, mit
- einem Verteilgestänge (2), das zwei seitliche Ausleger (3) und ein Mittelteil (4) umfasst, die vorzugsweise jeweils eine Mehrzahl von Ausbringelementen zum Ausbringen eines Verteilmaterials aufweisen, wobei jeder Ausleger (3) mittels einer Ausleger-Schwenkachse (A) mit dem Mittelteil (4) schwenkbar verbunden ist und wobei jeder Ausleger (3) zumindest zwei Segmente (3a) umfasst, die jeweils mittels einer Segment-Schwenkachse (B) schwenkbar miteinander verbunden sind,
- einem ansteuerbaren Stelleinrichtungssystem (30) zur Veränderung einer Schwenk-und/oder Höhenlage des Mittelteils (4) und/oder der Segmente (3a) relativ zu einer zu bearbeitenden landwirtschaftlichen Zielfläche (Z),
- Sensorik (10), die dazu ausgebildet ist, die Zielfläche (Z) zu erfassen und basierend auf der erfassten Zielfläche (Z) erste Messdaten zu generieren, und
- einer Steuereinrichtung (20), die dazu ausgebildet ist,
- basierend auf den ersten Messdaten ein Geländemodell zu erzeugen, und/oder
- Stellsignale (31) für das Stelleinrichtungssystem (30) abhängig von den ersten Messdaten und/oder von dem Geländemodell zu erzeugen.

2. Verteilmaschine (1) nach Anspruch 1, wobei die Sensorik (10) dazu ausgebildet ist, die Zielfläche (Z) über die im Wesentlichen gesamte Arbeitsbreite der zwei Ausleger (3) oder über die im Wesentlichen gesamte Arbeitsbreite des Verteilgestänges (2), insbesondere vorauseilend, zu erfassen, sodass vorzugsweise die Stellsignale (31) unter Berücksichtigung der Zielfläche (Z) über die im Wesentlichen gesamte Arbeitsbreite der zwei Ausleger (3) oder über die im Wesentlichen gesamte Arbeitsbreite des Verteilgestänges (2) erzeugbar sind.

3. Verteilmaschine (1) nach Anspruch 1 oder 2, wobei die Steuereinrichtung (20) dazu ausgebildet ist,
- die Stellsignale (31) zu erzeugen, bevor das Verteilgestänge (2) eine vorausliegende Höhenänderung und/oder Konturänderung der Zielfläche (Z) erreicht und/oder um eine Reaktionszeit bei der Schwenk- und/oder Höhenlagensteuerung des Verteilgestänges (2) zumindest teilweise zu kompensieren, und/oder
- die Stellsignale (31) abhängig von den ersten Messdaten und/oder von dem Geländemodell zu erzeugen, um eine Schwenk- und/oder Höhenlage des Mittelteils (4) und/oder der Segmente (3a) und somit insbesondere eine Pose des Verteilgestänges (2) an eine Kontur der Zielfläche (Z) anzupassen.

4. Verteilmaschine (1) nach einem der vorhergehenden Ansprüche, wobei das Mittelteil (4) um eine Mittel-Schwenkachse (C) schwenkbar ist.

5. Verteilmaschine (1) nach einem der vorhergehenden Ansprüche, wobei die Stellsignale (31) Stellsignale umfassen,
- um eine Schwenklagen-Veränderung der Ausleger (3) um die Ausleger-Schwenkachsen (A) zu bewirken, und/oder
- um eine Schwenklagen-Veränderung der Segmente (3a) um die Segment-Schwenkachsen (B) zu bewirken.

6. Verteilmaschine (1) nach einem der vorhergehenden Ansprüche, wobei die Stellsignale (31) Stellsignale umfassen,
- um ein, insbesondere im Wesentlichen vertikales, Anheben und Absenken des Mittelteils (4) zu bewirken, und/oder
- um eine Schwenklagen-Veränderung des Mittelteils (4) um eine Mittelteil-Schwenkachse (C) zu bewirken.

7. Verteilmaschine (1) nach einem der vorhergehenden Ansprüche, wobei die Steuereinrichtung (20) dazu ausgebildet ist, abhängig von dem Geländemodell eine an eine Kontur der Zielfläche (Z) angepasste Schwenk- und/oder Höhenlage für das Verteilgestänge (2) zu berechnen und vorzugsweise die Stellsignale (31) basierend auf der angepassten Schwenk- und/oder Höhenlage zu erzeugen,
- die iterativ und/oder näherungsweise an die Kontur der Zielfläche (Z) angenähert ist,
- bei der eine mittlere Abstandshöhe des Verteilgestänges (2) zur Kontur der Zielfläche (Z) minimiert und/oder reduziert ist, und/oder
- bei der eine Abstandsfläche (X) zwischen dem Verteilgestänge (2) und der Kontur der Zielfläche (Z) minimiert und/oder reduziert ist.

8. Verteilmaschine (1) nach einem der vorhergehenden Ansprüche, wobei die Steuereinrichtung (20) dazu ausgebildet ist, abhängig von dem Geländemodell eine Vielzahl von an eine Kontur der Zielfläche (Z) angepasste Schwenk- und/oder Höhenlagen für das Verteilgestänge (2) zu berechnen und vorzugsweise die Schwenk- und/oder Höhenlage auszuwählen und zur Erzeugung der Stellsignale (31) zu verwenden,
- die iterativ und/oder näherungsweise maximal an die Kontur der Zielfläche (Z) angenähert ist,
- bei der eine mittlere Abstandshöhe des Verteilgestänges (2) zur Kontur der Zielfläche (Z) iterativ und/oder näherungsweise maximal minimiert wird, und/oder
- bei der eine Abstandsfläche (X) zwischen dem Verteilgestänge (2) und der Kontur der Zielfläche (Z) iterativ und/oder näherungsweise maximal minimiert wird.

9. Verteilmaschine (1) nach einem der vorhergehenden Ansprüche, wobei die Steuereinrichtung (20) dazu ausgebildet ist, die an eine Kontur der Zielfläche (Z) angepasste Schwenk- und/oder Höhenlage für das Verteilgestände (2) abhängig von dem Geländemodell und zumindest einem von folgenden zu berechnen:
- den Schwenkfreiheitsgraden der Ausleger (3) um die Ausleger-Schwenkachsen (A),
- den Schwenkfreiheitsgraden der Segmente (3a) um die Segment-Schwenkachsen (B),
- dem Schwenkfreiheitsgrad des Mittelteils (4) um die Mittelteil-Schwenkachse (C),
- dem Höhenfreiheitsgrad des Mittelteils (4),
- einem Mindest-Sollabstand des Verteilgestänges (2) zur Kontur der Zielfläche (Z), und/oder
- der Geometrie des Verteilgestänges (2).

10. Verteilmaschine (1) nach einem der vorhergehenden Ansprüche, wobei die Sensorik (10) dazu ausgebildet ist, mittels einer Fernbereich-Erfassung der Zielfläche (Z) die ersten Messdaten zu generieren, um eine vorausliegende Kontur der Zielfläche (Z) zu ermitteln.

11. Verteilmaschine (1) nach einem der vorhergehenden Ansprüche, wobei die Sensorik (10) dazu ausgebildet ist, mittels einer Nahbereich-Erfassung zweite Messdaten zu generieren, um eine Nahbereich-Kontur, insbesondere eine Ist-Kontur, der Zielfläche (Z) zu ermitteln, wobei vorzugsweise die Fernbereich-Erfassung und/oder der Fernbereich - in Fahrtrichtung (V) der Verteilmaschine (1) gesehen - zumindest teilweise der Nahbereich-Erfassung und/oder dem Nahbereich vorauseilt.

12. Verteilmaschine (1) nach einem der vorhergehenden Ansprüche, wobei die Steuereinrichtung (20) dazu ausgebildet ist, basierend auf dem Geländemodell und/oder der Fernbereich-Erfassung das Stelleinrichtungssystem (30) vorauseilend voranzusteuern, vorzugsweise um es auf bevorstehende Veränderungen der Schwenk- und/oder Höhenlage des Verteilgestänges (2) vorzubereiten, und/oder basierend auf den zweiten Messdaten und/oder der Nahbereich-Erfassung das Stelleinrichtungssystem (30) anzusteuern, um die Schwenk- und/oder Höhenlage für das Verteilgestänge (2), insbesondere gezielt und/oder unmittelbar, an die Nahbereich-Kontur der Zielfläche (Z) anzupassen.

13. Verteilmaschine (1) nach einem der vorhergehenden Ansprüche, wobei
- die ersten Messdaten dreidimensionale Koordinaten der Zielfläche (Z) liefern, und/oder
- das Geländemodell dreidimensional ist, in Sektoren unterteilt ist und/oder auf den ersten Messdaten und/oder auf den dreidimensionalen Koordinaten der Zielfläche (Z) basiert.

14. Verteilmaschine (1) nach einem der vorhergehenden Ansprüche, wobei die Steuereinrichtung (20) dazu ausgebildet ist, die ersten Messdaten in ein Koordinatensystem mit einem Geländemodell-Raster und/oder Geländemodell-Sektoren zu übertragen und vorzugsweise abhängig von dem Koordinatensystem die Stellsignale (31) zu erzeugen.

15. Verteilmaschine (1) nach einem der vorhergehenden Ansprüche, wobei die Steuereinrichtung (20) dazu ausgebildet ist, das Geländemodell und/oder die ersten Messdaten unter Berücksichtigung der Ist-Position der Sensorik (10) und/oder der Ist-Schwenk- und/oder Höhenlage des Verteilgestänges (2), in oder auf ein, vorzugsweise dreidimensionales, Verteilmaschinen- und/oder Verteilgestänge-Koordinatensystem zu übertragen und vorzugsweise abhängig von dem Verteilmaschinen- und/oder Verteilgestänge-Koordinatensystem die Stellsignale (31) zu erzeugen.

16. Verteilmaschine (1) nach einem der vorhergehenden Ansprüche, wobei die Sensorik (10) umfasst:
- zumindest einen ersten Sensor (12) zur Fernbereich-Erfassung, der vorzugsweise ein Radarsensor ist und/oder einen dreidimensionalen Erfassungsbereich aufweist,
- zumindest einen zweiten Sensor (11) zur Nahbereich-Erfassung, der vorzugsweise ein Ultraschallsensor ist, und/oder
- zumindest einen ersten Sensor (12) zur sowohl Fernbereich-Erfassung als auch Nahbereich-Erfassung, der vorzugsweise ein Radarsensor ist und/oder einen dreidimensionalen Erfassungsbereich aufweist.

17. Verteilmaschine (1) nach einem der vorhergehenden Ansprüche, wobei die Sensorik (10) Radarsensorik ist oder umfasst und/oder einen dreidimensionalen Erfassungsbereich umfasst.

18. Verteilmaschine (1) nach einem der vorhergehenden Ansprüche, wobei die Sensorik (10), vorzugsweise zur Fernbereich-Erfassung und/oder Nahbereich-Erfassung, einen, insbesondere dreidimensionalen, Erfassungsbereich aufweist, wobei der Erfassungsbereich in Sektoren, vorzugsweise Messsektoren, unterteilt ist, wobei vorzugsweise die Sektoren des Erfassungsbereichs und die Sektoren des Geländemodells einander entsprechen und/oder die Sektoren des Erfassungsbereichs in Fahrtrichtung (V) der Verteilmaschine (1) unterschiedlich weit von dem Verteilgestänge (2) beabstandet sind.

19. Verteilmaschine (1) nach einem der vorhergehenden Ansprüche, wobei die Zielfläche (Z), die Kontur der Zielfläche (Z) und/oder die Konturänderung der Zielfläche (Z) in Längserstreckungsrichtung (L) der Ausleger (3) und/oder in Fahrtrichtung (V) der Verteilmaschine (1) vorausliegend unterschiedliche Höhen, Konturänderungen und/oder ein sich veränderndes Höhenprofil aufweist.

20. Verfahren zur Schwenk- und/oder Höhenlagensteuerung eines Verteilgestänges (2) einer landwirtschaftlichen Verteilmaschine (1), vorzugsweise einer Verteilmaschine (1) nach einem der vorhergehenden Ansprüche, mit
- einem Verteilgestänge (2), das zwei seitliche Ausleger (3) und ein Mittelteil (4) umfasst, die vorzugsweise jeweils eine Mehrzahl von Ausbringelementen zum Ausbringen eines Verteilmaterials aufweisen, wobei jeder Ausleger (3) mittels einer Ausleger-Schwenkachse (A) mit dem Mittelteil (4) schwenkbar verbunden ist und wobei jeder Ausleger (3) zumindest zwei Segmente (3a) umfasst, die jeweils mittels einer Segment-Schwenkachse (B) schwenkbar miteinander verbunden sind,
- einem ansteuerbaren Stelleinrichtungssystem (30) zur Veränderung einer Schwenk-und/oder Höhenlage des Mittelteils (4) und/oder der Segmente (3a) relativ zu einer zu bearbeitenden landwirtschaftlichen Zielfläche (Z),
- Sensorik (10), die dazu ausgebildet ist, die Zielfläche (Z) zu erfassen und basierend auf der erfassten Zielfläche (Z) erste Messdaten zu generieren, und
- einer Steuereinrichtung (20), die
- basierend auf den ersten Messdaten ein Geländemodell erzeugt, und/oder
- Stellsignale (31) für das Stelleinrichtungssystem (30) abhängig von den ersten Messdaten und/oder von dem Geländemodell erzeugt.
